# EUROPÄISCHE PATENTSCHRIFT

(11) **EP 0 576 885 B1**
(45) Veröffentlichungstag und Bekanntmachung des Hinweises auf die Patenterteilung: **06.09.1995**
(21) Anmeldenummer: 93109254.8
(22) Anmeldetag: 09.06.1993
(51) Int. Cl.: G01B 9/02

(54) **Mehrarmiges Interferometer**
Multi-arm interferometer
Interféromètre multi-bras

(30) Priorität: 03.07.1992 DE 4221850
(43) Veröffentlichungstag der Anmeldung: 05.01.1994
(73) Patentinhaber: JENOPTIK GmbH, D-07743 Jena (DE)
(72) Erfinder: Palme, Martin, D-6900 Jena (DE); Rothhardt, Manfred, D-6900 Jena (DE); Hänsel, Hartmut, D-6902 Jena (DE); Seide, Wolfgang, D-6900 Jena (DE); Sander, Hendrik, D-6902 Jena (DE)

(56) Entgegenhaltungen:
- EP-A- 0 281 385
- DE-A- 3 421 213
- DE-A- 4 028 051
- DE-A- 4 031 291
- PATENT ABSTRACTS OF JAPAN vol. 16, no. 377 (P-1401) 12. August 1992 & JP-A-41 20 402

## Beschreibung

Die Erfindung betrifft ein Heterodyninterferometer, bei dem aus zwei Strahlenbündeln geringfügig unterschiedlicher Frequenz mittels einer Empfangseinrichtung eine Meßinformation durch Auswertung von Interferenzsignalen gewonnen wird.

In der interferometrischen Längenmeßtechnik sind Heterodyn-Verfahren, die mit zwei eng benachbarten Interfrequenzen arbeiten, seit vielen Jahren eingeführt.
Der Vorteil derartiger Interferometer liegt in der einfachen Meßsignalauswertung der dem Meßweg proportionalen Phasenverschiebung.
Bei Heterodyninterferometern, wie sie z. B. in EP 0431792 oder EP 467343 beschrieben sind, wird ein Interferometerarm mit einem Strahlenbündel der ersten Frequenz und der zweite Interferometerarm mit einem Strahlenbündel der zweiten Frequenz betrieben. Nach Durchlaufen des Meßweges werden beide Strahlenbündel polarisationsgleich überlagert und die Phasenverschiebung des mit der Differensfrequenz periodischen Interfrequenzsignals zu der eines Referenzsignals, das durch eine Überlagerung der Strahlenbündel beider Frequenzen vor der Aufteilung auf die beiden Interferometerarme als Interferenzsignal erzeugt wird, verglichen.
Der Nachteil für die technische Realisierung an diesem Prinzip ist, daß eine identische Strahlführung der Strahlenbündel beider Frequenzen vom ersten Interferenzort zur Referenzsignalgewinnung bis zur Aufteilung auf die beiden Interferenzarme zwingend notwendig ist.
Neben einer stabilen Differenzfrequenz setzt die meßtechnische Anwendung von Heterodyninterferometern stabile Einzelfrequenzen voraus und erfordert die Korrektur von Umwelteinflüssen, falls die Messung nicht im Vakuum erfolgt. Darüberhinaus ist für den Aufbau eine Reihe unterschiedlicher optischer Mittel, wie Strahlteiler, Polarisationsteiler, λ/4-Platten u. a. notwendig, die eine Miniaturisierung erschweren. Außerdem führt ihre Unvollkommenheit zu nichtlinearen Phasenfehlern und damit zu Ungenauigkeiten bei der Messung, die nur durch erheblichen, zusätzlichen Aufwand zu beseitigen sind (Hou, Wenmei; Wilkening, Günter; PTB Braunschweig 1991 "Investigation and Compensation of the Non-linearity of Heterodyne Interfermeters").

Die Aufgabe der Erfindung besteht in der Realisierung eines kompakten Interferometers mit geringen Abmessungen, in dem bei Beibehaltung des heterodynen Meßprinzips Frequenzschwankungen der Laserlichtquelle und Änderungen der Umweltbedingungen das erzielte Meßergebnis weitestgehend unbeeinflußt lassen und nichtlineare Fehler ausgeschaltet werden.

Erfindungsgemäß wird diese Aufgabe bei einem Heterodyninterferometer der eingangs genannten Art dadurch gelöst, daß für jedes Strahlenbündel ein Quellort zur Erzeugung von Teilstrahlenbündeln vorgesehen ist, wobei jeweils die in den Quellorten auf gleiche Weise erzeugten Teilstrahlen verschiedener Frequenz paarweise einander zugeordnet sind und zumindest abschnittsweise gleiche Ausbreitungsrichtung aufweisen, jedes Teilstrahlenbündel der einen Frequenz nach dem Durchlaufen jeweils eines Interferometerarms mit dem zugeordneten Teilstrahlenbündel der anderen Frequenz ohne Durchlaufen eines Interferometerarms einen gemeinsamen Strahlengang zur Interferenzbildung aufweist, und die gemeinsamen Strahlengänge jeweils einen separaten Empfänger zur Erfassung von Überlagerungssignalen, die in einer nachfolgenden Auswerteeinheit bezüglich ihrer Phasendifferenz ausgewertet werden, besitzen.
Die Quellorte liegen vorteilhafterweise in verschiedenen zueinander parallelen Beugungsebenen eines Gitters, dem ein Gitter zur Parallelisierung benachbart ist.
Für eine kompakte Lösung sind das Gitter zur Teilstrahlenbündelerzeugung und das Gitter zur Parallelisierung der Teilstrahlenbündel auf entgegengesetzten Flächen eines transparenten Trägers aufgebracht, der entweder strahlenumlenkende und strahlenteilende Flächen zur Bildung der gemeinsamen Strahlengänge aufweist oder dem ein transparenter Körper mit solchen Flächen benachbart ist.
Zur Reduzierung von Rückkopplungen in die Laserlichtquelle ist es von Vorteil, wenn die Teilstrahlenbündel beider Frequenzen Rückläufe besitzen, die zur Bildung der gemeinsamen Strahlengänge entgegengesetzt benachbart zu den Beugungsebenen außerhalb der Gitter erfolgen.
In einer weiteren vorteilhaften Ausbildung liegen die Quellorte in einem optischen Substrat, in dem die Strahlenbündel der verschiedenen Frequenzen mit akusto-optischen Mitteln erzeugt werden, und in dem die Führung der parallelisierten Teilstrahlenbündel und die Interferenzbildung in den gemeinsamen Strahlengängen erfolgt.
Mit der erfindungsgemäßen Lösung ist mit geringem technischen Aufwand ein kompakter Aufbau möglich, in dem Strahlenbündel für mehrere Interferometerarme erzeugt werden können, so daß ein derartiges Interferometer für verschiedenartigste Meßprobleme einsetzbar wird. Die Symmetriebedingung bleibt für die Genauigkeitsanforderungen einer Wegmessung hinreichend genau erfüllt durch die parallele Strahlenführung der Teilstrahlenbündel der verschiedenen Frequenzen zueinander und die Interferenzbildung von Teilstrahlenbündelpaaren, die außerhalb der Interferometerarme quasigleiche optische Wege durchlaufen hatten.

Die Erfindung soll nachstehend anhand der schematischen Zeichnung näher erläutert werden. Es zeigen:
- Fig. 1: Prinzipaufbau eines erfindungsgemäßen Heterodyn-Interferometers
- Fig. 2: ein Ausführungsbeispiel eines erfindungsgemäßen Heterodyn-Interferometers mit verminderter Rückkopplung in die Laserlichtquelle
- Fig. 3: ein Ausführungsbeispiel eines erfindungsgemäßen Heterodyn-Interferometers in integriert-optischer Ausführung.

In den Strahlengängen zweier Strahlenbündel 1, 2, die vorzugsweise einer gemeinsamen Laserlichtquelle (nicht dargestellt) entstammen und voneinander verschiedene, engbenachbarte Frequenzen f₁, f₂ besitzen, sind nacheinander Beugungsgitter 3, 4 und ein Strahlenteiler 5 angeordnet, dessen Teilerflächen 5.1 und 5.2 jeweils einem der Strahlengänge 1, 2 zugeordnet sind. Aus beiden Strahlenbündeln 1, 2 am Beugungsgitter 3 erzeugte Teilstrahlenbündel werden am Beugungsgitter 4 parallelisiert. Die Beugungsgitter 3, 4 können auf entgegengesetzten Flächen eines transparenten Trägers aufgebracht sein.
Jedes der Teilstrahlenbündel der ersten Frequenz f₁ wird nach seinem Austritt aus dem Strahlenteiler 5 von einem Reflektor 6, 7 oder 8 eines Interferometerarms wieder auf die Teilerfläche 5 gerichtet und bildet nach seiner Umlenkung ab der Teilerfläche 5.2 mit einem der Teilstrahlenbündel der zweiten Frequenz f₂ zur Interferenzbildung einen gemeinsamen Strahlengang bis zu einem der Photoempfänger 9, 10 oder 11. Während der Reflektor 7 als Meßreflektor verschiebbar in Strahlrichtung ausgebildet ist, sind die beiden anderen ortsfest und in einem definierten Abstand zueinander angeordnet.
Eine nichtdargestellte, mit den Photoempfängern 9, 10, 11 gekoppelte Einheit dient der Auswertung der Phasendifferenz zwischen den Überlagerungssignalen, wobei der Vergleich immer zwischen dem Überlagerungssignal aus einem Interferometerarm mit einem festen Reflektor 6 oder 8 und dem Interferometerarm mit dem verschiebbaren Reflektor 7 erfolgt.
Die Lage des Nullpunktes bei dieser Auswertung wird an den Ort gelegt, an dem der Reflektor 7 jeweils mit einem der Reflektoren 6 oder 8 einen gleichen Abstand zur Teilerfläche 5.1 besitzt. Eine andere Möglichkeit der Anordnung der Photoempfänger ist in gestrichelter Weise und mit den Bezeichnungen 9`, 10` und 11` dargestellt.

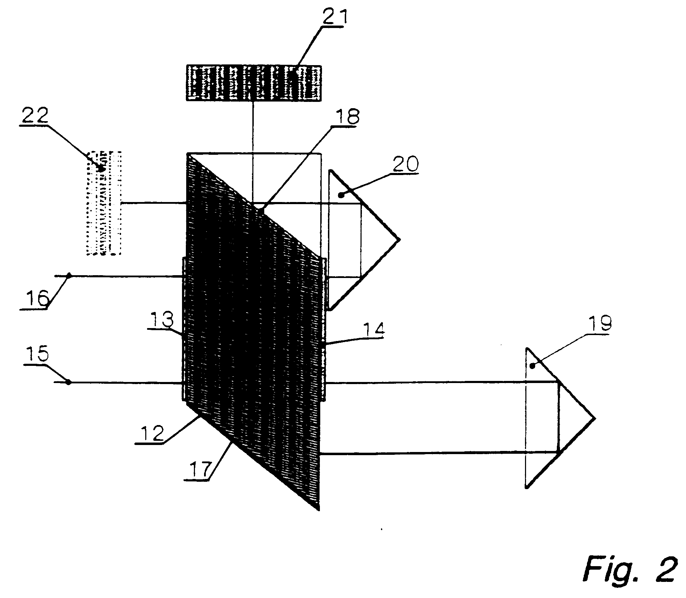

Gemäß Fig. 2 dient ein transparenter Körper 12 mit seinen zueinander parallelen Seitenflächen als Träger zweier Gitter 13, 14, die in den Strahlengang zweier Strahlenbündel 15, 16 mit voneinander verschiedenen, eng benachbarten Frequenzen f₃, f₄ angeordnet sind. Außerdem besitzt der transparente Körper 12 zueinander parallele, gegen die Seitenflächen geneigte Grund- und Deckflächen, von denen die eine Fläche 17 verspiegelt ist und die andere als Teilerfläche 18 zur Erzeugung gemeinsamer Strahlengänge dient.

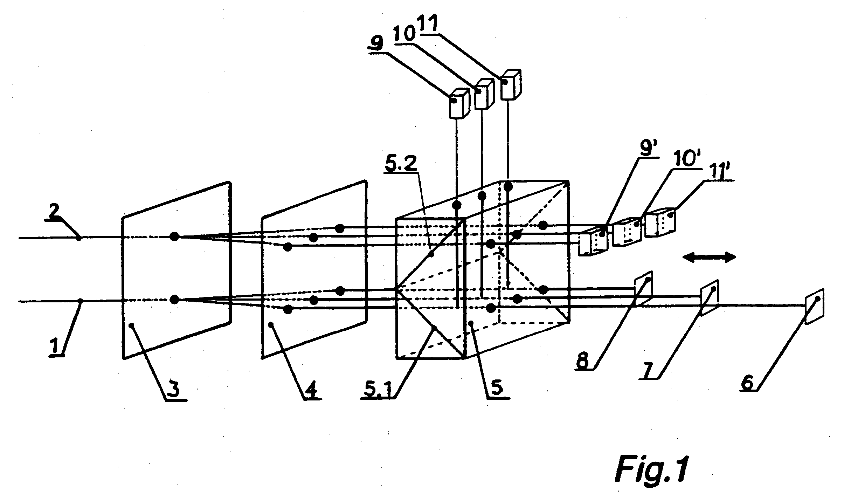

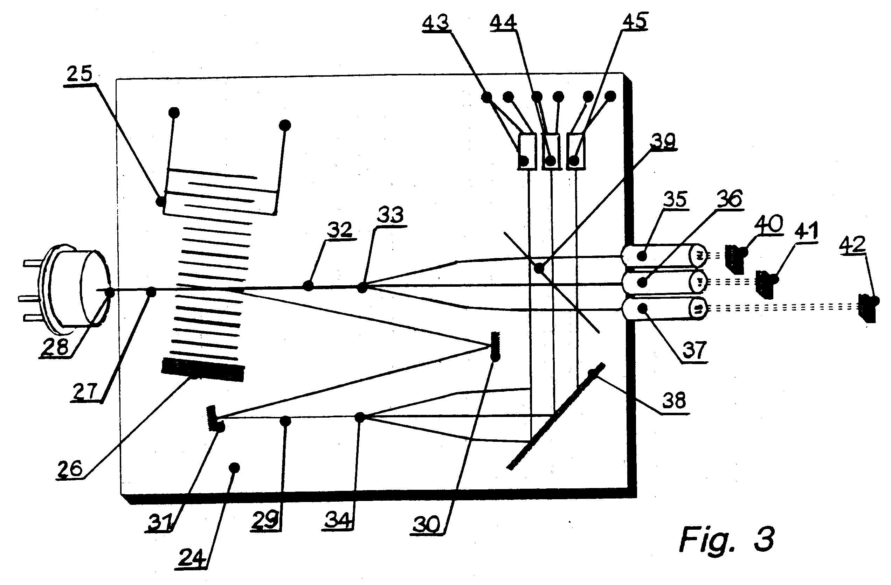

Von den durch Retroreflektoren ersetzten Reflektoren 6, 7, 8 gemäß Fig. 1 ist lediglich der Reflektor 19 als Abschlußelement eines Interferometerarms dargestellt. Im Strahlengang des Strahlenbündels 16 ist dem Gitter ein Umlenker 20 benachbart.
Die am Gitter 13 in zueinander parallelen Beugungsebenen in gleicher Weise wie in Fig. 1 erzeugten Teilstrahlenbündel werden am Gitter 14 parallelisiert.
Sowohl die Teilstrahlenbündel der ersten Frequenz f₃, die für die Interferometerarme bestimmt sind, als auch die der zweiten Frequenz f₄ werden in Ebenen reflektiert, die den Beugungsebenen entgegengesetzt benachbart sind, ohne das Gitter 14 nochmals zu durchlaufen.
Die Teilstrahlenbündel der ersten Frequenz f₃ werden an der verspiegelten Fläche 17 in gemeinsame Strahlengänge mit den Teilstrahlenbündeln der zweiten Frequenz f₄ ab der Teilerfläche 18 zur Interferenzbildung gelenkt.
Von jeweils drei Empfängern für die Überlagerungssignale sind der Empfänger 21 und der alternative, gestrichelt dargestellte Empfänger 22 in der Seitenansicht sichtbar.
Bei dem in Fig. 3 dargestellten Interferometer wird ein optisches Substrat 24 verwendet, in dem über eine elektrische Wechselspannung durch das Zusammenwirken eines Interdigitalwandlers 25 mit einem Absorber 26 eine akustische Oberflächenwelle erzeugt wird. Von einem in einer Wellenleiterschicht 27 des Substrates 24 eingekoppelten Laserstrahlenbündel 28 mit einer ersten Frequenz wird durch die Oberflächenwelle ein Teilbündel 29 abgebeugt, dessen Frequenz um den Betrag der Frequenz der Wechselspannung verändert ist. Geeignete Umlenkelemente 30, 31 richten das abgebeugte Teilbündel 29 parallel zum ursprünglichen Strahlenbündel 32 aus. Gleichartige Amplitudenteiler sind Quellorte 33, 34 für Teilstrahlenbündel, von denen die Teilstrahlenbündel der ursprünglichen Frequenz über Kollimatoren 35, 36, 37 Interferometerarmen zugeführt werden.
Die Teilstrahlenbündel der veränderten Frequenzen werden von einem Reflektor 38 umgelenkt und in einem Teiler 39 mit den an Spiegeln 40, 41, 42 reflektierten Teilstrahlenbündeln der ursprünglichen Frequenz zum Zweck der Interferenzbildung überlagert. Die mit der Differenzfrequenz periodischen Interferenzsignale werden mittels Photodetektoren 43, 44, 45 gemessen. Die Phasenverschiebung wird, wie bereits beschrieben, ausgewertet.

## Patentansprüche

1. Heterodyninterferometer, bei dem aus zwei Strahlenbündeln (1,2) geringfügig unterschiedlicher Frequenz mittels einer Empfangseinrichtung eine Meßinformation durch Auswertung von Interferenzsignalen gewonnen wird, dadurch gekennzeichnet, daß
- für jedes Strahlenbündel (1,2) ein Quellort zur Erzeugung von Teilstrahlenbündeln vorgesehen ist, wobei jeweils die in den Quellorten auf gleiche Weise erzeugten Teilstrahlen verschiedener Frequenz paarweise einander zugeordnet sind und zumindest abschnittsweise gleiche Ausbreitungsrichtung aufweisen,
- jedes Teilstrahlenbündel der einen Frequenz nach dem Durchlaufen jeweils eines Interferometerarms mit dem zugeordneten Teilstrahlenbündel der anderen Frequenz ohne Durchlaufen eines Interferometerarms einen gemeinsamen Strahlengang zur Interferenzbildung aufweist, und
- die gemeinsamen Strahlengänge jeweils einen separaten Empfänger (9,10,11) zur Erfassung von Überlagerungssignalen, die in einer nachfolgenden Auswerteeinheit bezüglich ihrer Phasendifferenz ausgewertet werden, besitzen.

2. Heterodyninterferometer nach Anspruch 1, dadurch gekennzeichnet,
daß die Quellorte in verschiedenen Punkten eines ersten Gitters (3,13) zur Teilstrahlenbündelerzeugung liegen, wobei die von einem der Quellorte ausgehenden Teilstrahlen eine Beugungsebene aufspannen, die zu der Beugungsebene des anderen Quellortes parallel ist,
daß ein zweites Gitter (4,14) zur Parallelisierung der Teilstrahlenbündel innerhalb der Beugungsebenen zu dem ersten Gitter (3,13) parallel benachbart ist und
daß die Strahlenbündel (1,2) parallel zueinander auf das erste Gitter (3,13) treffen und alle Teilstrahlenbündel das zweite Gitter (4,14) parallel zueinander wieder verlassen.

3. Heterodyninterferometer nach Anspruch 2, dadurch gekennzeichnet,
daß das erste Gitter (13) zur Teilstrahlenbündelerzeugung und das zweite Gitter (14) zur Parallelisierung der Teilstrahlenbündel auf entgegengesetzten Flächen eines transparenten Trägers (12) aufgebracht sind.

4. Heterodyninterferometer nach Anspruch 3, dadurch gekennzeichnet,
daß der transparente Träger (12) strahlenumlenkende und strahlenteilende Flächen (17,18) zur Bildung der gemeinsamen Strahlengänge aufweist.

5. Heterodyninterferometer nach Anspruch 3, dadurch gekennzeichnet,
daß dem transparenten Träger (12) ein transparenter Körper (5) benachbart ist, der strahlenumlenkende und strahlenteilende Flächen (5.1,5.2) zur Bildung der gemeinsamen Strahlengänge aufweist.

6. Heterodyninterferometer nach Anspruch 4, dadurch gekenzeichnet,
daß die zugeordneten Teilstrahlenbündel beider Frequenzen jeweils zu der vor Entstehung und nach Parallelisierung vorliegenden Strahlrichtung entgegengesetzte, parallel versetzte reflektierte Strahlengänge besitzen, die außerhalb des zweiten Gitters (14) liegen, und daß am transparenten Träger (12) mindestens teilverspiegelte, geneigte Flächen (17,18) zur Bildung der gemeinsamen Strahlengänge in einer zwischen den beiden Gittern (13,14) liegendend parallelen Ebene vorhanden sind.

7. Heterodyninterferometer nach Anspruch 1, dadurch gekennzeichnet,
daß akustooptische Mittel zur Erzeugung der Strahlenbündel unterschiedlicher Frequenz (29,32) aus einem einzigen Laserstrahlenbündel (28) in einem optischen Substrat (24) angeordnet sind, daß sowohl die Quellorte (33,34) als auch die Mittel zur Parallelisierung in Form von Amplitudenteilern ausgeführt sind und daß die Mittel zur Zusammenführung zwecks Interferenzbildung der Teilstrahlenbündel in den gemeinsamen Strahlengängen auf dem optischen Substrat (24) integriert sind.

## Claims

1. Heterodyne interferometer in which measuring data is produced by means of a receiving device by analysing interference signals from two light beams (1, 2) of slightly different frequency, characterised in that
- a source position for producing partial light beams is provided for each light beam (1, 2), whereby the partial beams of different frequency produced in the same manner in the source positions are associated with one another in pairs and have the same direction of propagation, at least in sections,
- each partial light beam of one frequency after passing through a respective interferometer arm has a common beam path with the associated partial light beam of the other frequency without passing through an interferometer arm for the purpose of producing interference, and
- the common beam paths each have a separate receiver (9, 10, 11) for detecting superposed signals, which are analysed in a subsequent analysing unit with respect to their phase difference.

2. Heterodyne interferometer as claimed in Claim 1, characterised in that
the source positions are situated in different points of a first grating (3, 13) for producing partial light beams, whereby the partial beams emanating from one of the source positions extend in a diffraction plane which is parallel to the diffraction plane of the other source position,
that a second grating (4, 14) for making the component light beams parallel is parallel and adjacent to the first grating (3, 13) within the diffraction planes and
that the partial beams (1, 2) impinge on the first grating (3, 13) parallel to one another and all the partial light beams leave the second grating (4, 14) again parallel to one another.

3. Heterodyne interferometer as claimed in Claim 2, characterised in that the first grating (13) for producing the partial light beams and the second grating (14) for making the partial light beams parallel are applied to opposed surfaces of a transparent carrier (12).

4. Heterodyne interferometer as claimed in Claim 3, characterised in that the transparent carrier (12) has beam deflecting and beam splitting surfaces (17, 18) for forming the common beam paths.

5. Heterodyne interferometer as claimed in Claim 3, characterised in that adjacent to the transparent carrier (12) there is a transparent body (5) which has beam deflecting and beam splitting surfaces (5.1, 5.2) for forming the common beam paths.

6. Heterodyne interferometer as claimed in Claim 4, characterised in that the associated partial light beams of both frequencies have parallel offset, reflected beam paths which are opposed to the beam direction before production and after being made parallel and which are situated outside the second grating (14) and that provided on the transparent carrier (12) there are at least partially reflective, inclined surfaces (17, 18) for forming the common beam paths in a parallel plane situated between the two gratings (13, 14).

7. Heterodyne interferometer as claimed in Claim 1, characterised in that acousto-optical means for producing the light beams of different frequency (29, 32) from a single laser light beam (28) are arranged in an optical substrate (24), that both the source positions (33, 34) and the means for making the beams parallel are constructed in the form of amplitude splitters and that the means for combining the partial light beams for the purpose of producing interference in the common beam paths are integrated on the optical substrate (24).

## Revendications

1. Interféromètre hétérodyne, dans lequel une information de mesure est obtenue, par exploitation de signaux d'interférence, à partir de deux faisceaux de rayons (1, 2) de fréquence légèrement différente, au moyen d'un dispositif de réception, caractérisé en ce que
- pour chaque faisceau (1, 2) il est prévu une source destinée à produire des faisceaux partiels, les faisceaux partiels de fréquence différente, produits chacun de la même manière dans les sources, étant affectés l'un à l'autre par paires et présentant au moins en partie un même sens de propagation,
- chaque faisceau partiel d'une fréquence, après passage d'un bras d'interféromètre avec le faisceau partiel correspondant de l'autre fréquence sans passage à travers un bras d'interféromètre, présente un parcours commun pour la formation d'interférences, et
- les parcours communs des faisceaux possèdent chacun un récepteur séparé (9, 10, 11) destiné à détecter des signaux de superposition, qui sont exploités dans une unité d'exploitation suivante, quant à leur différence de phase.

2. Interféromètre hétérodyne selon la revendication 1, caractérisé en ce que les sources se situent en différents points d'une première grille (3, 13) pour la production de faisceaux partiels, les faisceaux partiels partant de l'une des sources, recouvrant un plan de diffraction, qui est parallèle au plan de diffraction de l'autre source,
en ce qu'une seconde grille (4, 14) destinée à paralléliser les faisceaux partiels à l'intérieur des plans de diffraction, est voisine et parallèle de la première grille (3, 13) et
en ce que les faisceaux partiels (1, 2) parviennent parallèles entre eux sur la première grille (3, 13) et tous les faisceaux partiels sortent à nouveau parallèles entre eux de la seconde grille (4, 14).

3. Interféromètre hétérodyne selon la revendication 2, caractérisé en ce que la première grille (13) destinée à la production de faisceaux partiels et la seconde grille (14) destinée à rendre parallèles les faisceaux partiels sont appliquées sur des surfaces opposées d'un support (12) transparent.

4. Interféromètre hétérodyne selon la revendication 3, caractérisé en ce que le support (12) transparent présente des surfaces (17, 18) déviant les rayons et les divisant, destinées à former les parcours de faisceaux communs.

5. Interféromètre hétérodyne selon la revendication 3, caractérisé en ce qu'à proximité du support (12) transparent se trouve un corps (5) transparent, qui présente des surfaces (5.1, 5.2) déviant les faisceaux et les divisant afin de former des parcours de faisceaux communs.

6. Interféromètre hétérodyne selon la revendication 4, caractérisé en ce que les faisceaux partiels correspondants de deux fréquences possèdent chacun des parcours de faisceaux réfléchis, décalés et parallèles, opposés à la direction existant avant formation et après parallélisation, parcours qui se situent à l'extérieur de la seconde grille (14), et en ce que sur le support (12) transparent existent au moins des surfaces (17, 18) inclinées, en partie réfléchies, pour la formation des parcours de faisceaux communs, dans un plan parallèle, situé entre les deux grilles (13, 14).

7. Interféromètre hétérodyne selon la revendication 1, caractérisé en ce que des moyens opto-acoustiques destinés à produire les faisceaux de rayons de fréquence (29, 32) différente, à partir d'un seul faisceau laser (28), sont placés dans un substrat (24) optique, en ce que les sources (33, 34) ainsi que les moyens de parallélisation sont réalisés sous la forme de diviseurs d'amplitude et en ce que les moyens de réunion pour formation d'interférences des faisceaux, sont intégrés dans les parcours de rayons communs, sur le substrat optique (24).
